# EUROPÄISCHE PATENTSCHRIFT

(11) **EP 0 865 977 B1**
(45) Veröffentlichungstag und Bekanntmachung des Hinweises auf die Patenterteilung: **27.03.2002**
(21) Anmeldenummer: 98104417.5
(22) Anmeldetag: 12.03.1998
(51) Int. Cl.: B60T 13/74

(54) **Scheibenbremse mit elektromotorischer Betätigung**
Disc brake being actuated by an electric motor
Frein à disque actionné par un moteur électrique

(30) Priorität: 21.03.1997 DE 19711851
(43) Veröffentlichungstag der Anmeldung: 23.09.1998
(73) Patentinhaber: Continental Aktiengesellschaft, 30165 Hannover (DE)
(72) Erfinder: Dieckmann, Thomas, Dr., 30982 Pattensen (DE); Henken, Immanuel, 31867 Lauenau (DE); Leitermann, Wulf, 30163 Hannover (DE)

(56) Entgegenhaltungen:
- EP-A- 0 520 525

## Beschreibung

Die Erfindung betrifft einen Elektromotor, der zumindest folgende Bestandteile enthält:
- eine in zwei Drehrichtungen drehbare Motorachse
- eine Feststellbremse, die in einer ersten Position eine Drehung der Motorachse in beiden Drehrichtungen ungehindert zuläßt und in einer zweiten Position eine Drehung der Motorachse in einer Drehrichtung hemmt
- eine Betätigungsvorrichtung, mit der die Feststellbremse von der ersten Position in die zweite Position überführbar ist.

Die Erfindung betrifft ferner einen Bremsaktuator für eine elektrische Bremsanlage, die einen solchen Elektromotor enthält. Derartige Bremsaktuatoren weisen eine Zuspannvorrichtung auf, die mit der Motorachse des Elektromotors in Wirkverbindung steht.

Ein Bremsaktuator für eine elektrische Bremsanlage mit einem Elektromotor der eingangs genannten Art ist beispielsweise aus der EP 0 520 525 B1 bekannt. Der Bremsaktuator enthält einen Elektromotor mit einer Motorachse, die bei Betätigung des Bremsaktuators in Rotation versetzt wird und über ein Getriebe Bremsbeläge gegen eine Bremstrommel bzw. gegen eine Bremsscheibe preßt. Darüber hinaus enthält der Bremsaktuator eine Feststellbremse, die wie im Folgenden erläutert aufgebaut ist. An dem dem Getriebe gegenüberliegenden Ende der Motorachse ist eine Reibungsplatte angeordnet, die sich bei Betätigung des Elektromotors mit der Motorachse dreht. Dieser Reibungsplatte gegenüberliegend ist eine weitere Reibungsplatte drehfest angeordnet, die gegenüber der zuerst genannten Reibungsplatte axial beweglich ist. Üblicherweise besteht zwischen den beiden genannten Reibungsplatten ein Luftspalt, so dass die Drehung der Motorachse bei Betätigung des Bremsaktuators in beiden Drehrichtungen ungehindert möglich ist. Soll eine Radbremse jedoch mit Hilfe des Bremsaktuators festgestellt werden, so werden zunächst durch Betätigung des Bremsaktuators die Bremsbeläge gegen die Bremstrommel gepresst und somit eine Bremskraft erzeugt. Danach wird mit Hilfe eines zweiten Elektromotors die zweite Reibungsplatte in eine axiale Bewegung versetzt, so dass der Luftspalt zwischen den beiden Reibungsplatten verschwindet und die beiden Reibungsplatten reibschlüssig aneinandergepreßt werden. Infolgedessen wird eine Drehung der Motorachse des ersten Elektromotors unterbunden, so dass sich der Bremsaktuator nicht durch Rückstellkräfte zurückstellen kann und die zuvor eingestellte Bremskraft an dem entsprechenden Rad erhalten bleibt.

Der aus der EP 0 520 525 B1 bekannte Bremsaktuator mit Feststellbremse ist so ausgebildet, dass die Feststellbremse sowohl im "gelösten Zustand" als auch im "ungelösten Zustand" stromlos ist und somit der der Feststellbremse zugeordnete zweite Elektromotor einen zu vernachlässigenden Stromverbrauch aufweist. Der Aufbau der elektrischen Feststellbremse ist jedoch als aufwendig zu bezeichnen. Darüber hinaus weist der aus der EP 0 520 525 B1 bekannte Bremsaktuator mit Feststellbremse eine Unsicherheit auf. Wird nämlich die elektrische Feststellbremse aufgrund eines technischen Fehlers oder vom Kraftfahrzeugfahrer unbeabsichtigt betätigt, so führt dies zu einer Feststellung der Motorachse des Elektromotors des Bremsaktuators und der Bremsaktuator kann erst dann wieder betätigt werden, wenn die elektrische Feststellbremse "gezielt gelöst" wird. Ein automatisches Lösen der Feststellbremse ist nicht möglich. Somit kommt es bei einer unvorhergesehenen bzw. unbeabsichtigten Betätigung der Feststellbremse zu einem Ausfall des Bremsaktuators.

Der Erfindung liegt die Aufgabe zugrunde, einen Elektromotor mit einer Feststellbremse zu schaffen, dessen Feststellbremse einen einfachen Aufbau aufweist und darüber hinaus so ausgebildet ist, dass die oben erwähnten Nachteile vermieden werden. Darüber hinaus soll der Elektromotor für den Einbau in Bremsaktuatoren geeignet sein.

Gemäß den kennzeichnenden Merkmalen des Anspruchs 1 wird die Aufgabe dadurch gelöst, dass die Feststellbremse einen Ring und eine gegenüber der Motorachse drehfeste Verankerung enthält, wobei der Ring
- axial verschiebbar zur Motorachse des Elektromotors angeordnet ist und
- in einer ersten axialen Position eine Drehung der Motorachse in beiden Drehrichtungen ungehindert zuläßt und
- sich in einer zweiten axialen Position mit der Motorachse im Eingriff befindet und sich mit dieser dreht, wobei in der zweiten axialen Position des Ringes eine Drehung der Motorachse in die eine Drehrichtung dazu führt, dass der Ring in Eingriff mit der gegenüber der Motorachse drehfesten Verankerung des Bremsaktuators gelangt,
wohingegen eine Drehung der Motorachse in die andere Drehrichtung dazu führt, dass sich der Eingriff zwischen der Motorachse und dem Ring und zwischen der drehfesten Verankerung und dem Ring löst.

Vorzugsweise ist der auf der Motorachse axial bewegliche Ring als Konusring ausgebildet, der in einer ersten axialen Position eine Drehung der Motorachse in beide Drehrichtungen ungehindert zulässt. In einer zweiten axialen Position und bei Drehung der Motorachse in eine Drehrichtung wird der Konusring in einen gehäusefesten Sperrring eingedreht. Der Konusring ist dann zwischen der Motorachse und dem Sperrring eingeklemmt und unterbindet eine Drehung der Motorachse.

Die mit der Erfindung erzielten Vorteile sind insbesondere darin zu sehen, dass die Feststellbremse des Elektromotors einfach aufgebaut ist und nur aus wenigen Bauteilen besteht. Aus diesem Grunde ist es möglich, die Feststellbremse platzsparend in den Elektromotor einzubauen, so dass sich die Elektromotoren und damit die Bremsaktuatoren, in die sie eingebaut werden, durch den Einbau der Feststellbremse gar nicht bzw. nur geringfügig vergrößern. Ein weiterer Vorteil der Erfindung ist darin zu sehen, dass die Feststellbremse des Elektromotors einfach gelöst werden kann. Dazu braucht der Elektromotor nämlich nur in der Drehrichtung betätigt zu werden, die zu einem Lösen des Ringes aus der drehfesten Verankerung führt. Ein weiterer Vorteil der Erfindung ist schließlich darin zu sehen, dass die Feststellbremse eine Drehung der Motorachse in eine Drehrichtung immer zuläßt. Vorzugsweise werden bei einer Drehung in diese Drehrichtung die Bremsbeläge auf die Bremsscheibe zubewegt, so dass bei beliebiger Position der Feststellbremse die Erzeugung einer Bremskraft mit dem Bremsaktuator möglich ist. Es kann also nicht zu einem gefährlichen Ausfall des Bremsaktuators durch eine ungewollt "angezogene" Feststellbremse kommen.

Gemäß einer Weiterbildung der Erfindung nach Anspruch 2 erfolgt der Eingriff zwischen dem Ring und der Motorachse in der zweiten Position des Ring über einen Reibschluß. In diesem Fall ist der Ring als Konusring ausgebildet und die Motorachse verfügt über einen Reibkegel, auf den sich der Konusring in der zweiten Position schiebt. Der Vorteil dieser Weiterbildung ist darin zu sehen, dass der Ring einen einfachen Aufbau aufweist und in jeder Winkelposition auf den Reibkegel der Motorachse aufgeschoben werden kann.

Gemäß einer alternativen Weiterbildung der Erfindung nach Anspruch 3 erfolgt der Eingriff zwischen dem Ring und der Motorachse in der zweiten Position des Ringes über einen Formschluß. Der Vorteil dieser Weiterbildung ist darin zu sehen, dass ein Formschluß unabhängig von den Reibungsbeiwerten zwischen dem Ring und der Motorachse ist, so dass bei der Auswahl der Materialien für die Motorachse und den Ring dieser Materialparameter unberücksichtigt bleiben kann.

Gemäß einer Weiterbildung der Erfindung nach Anspruch 4 erfolgt der Eingriff zwischen dem Ring und der gegenüber der Motorachse drehfesten Verankerung des Bremsaktuators über einen Formschluß.

Gemäß einer Weiterbildung der Erfindung nach Anspruch 5 ist die Betätigungsvorrichtung, mit Hilfe der der Sperrring von der ersten axialen Position in die zweite axiale Position überführbar ist, mechanisch, elektromagnetisch oder elektromotorisch ausgebildet. Eine mechanische Betätigungsvorrichtung kann beispielsweise mit Hilfe eines Bowdenzuges realisiert werden, so wie es auch bei heutigen Feststellbremsen in Kraftfahrzeugen der Fall ist. Ein derartiger Bowdenzug kann über einen Handhebel betätigt werden, so dass ein Kraftfahrzeugfahrer sich bei einer derartigen Ausbildung der Betätigungsvorrichtung nicht umzustellen braucht. Der Vorteil einer elektromagnetischen Betätigungsvorrichtung ist hingegen darin zu sehen, dass sie in einem kompakten Aufbau realisiert werden kann und nur einen geringen Energiebedarf aufweist.

Ein Ausführungsbeispiel und weitere Vorteile der Erfindung werden im Zusammenhang mit den nachstehenden Figuren erläutert, darin zeigt:
- Fig. 1: einen Bremsaktuator im Querschnitt,
- Fig. 2: einen Ausschnitt aus der Fig. 1 in Explosionsdarstellung.

Das in den Figuren gezeigte Ausführungsbeispiel zeigt den erfindungsgemäßen Elektromotor bereits in einen Bremsaktuator eingebaut. Die Verwendung des Elektromotors ist jedoch nicht auf Bremsaktuatoren beschränkt.

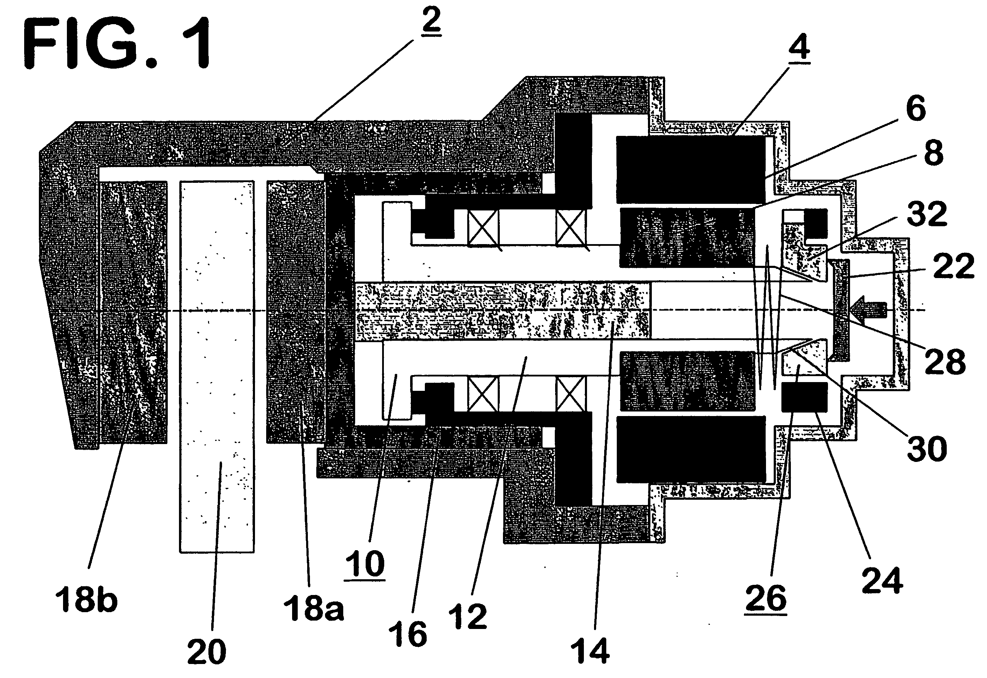

Figur 1 zeigt in schematischer Darstellung einen Bremsaktuator im Querschnitt, wobei nur die für die nachfolgenden Erläuterungen notwendigen Bestandteile gezeigt sind. Der Bremsaktuator 2 enthält einen Elektromotor 4 mit einem gehäusefesten Stator 6 und einem Rotor 8, der sich im Eingriff mit einer Motorachse 12 einer Zuspannvorrichtung 10 befindet. Damit ist eine Wirkverbindung zwischen dem Elektromotor 4 und der Zuspannvorrichtung 10 hergestellt. Bei einem Bremsvorgang wird durch den Elektromotor 4 der Rotor 8 und somit die Motorachse 12 in Rotation entgegen dem Uhrzeigersinn (bei Blickrichtung durch die Betätigungsvorrichtung 22 auf die Motorachse 12) versetzt. Die Rotation der Motorachse 12 wird auf die Spindelstange 14 übertragen und in eine axiale Bewegung der Spindelstange 14 umgewandelt. Aufgrunddessen treibt die Spindelstange 14 einen Bremskolben 16 an, so dass durch den Bremskolben 16 die Bremsbeläge 18a und 18b an die Bremsscheibe 20 angepreßt werden, wodurch schließlich eine Bremskraft entsteht. Nach Beendigung des Bremsvorganges wird der Elektromotor 4 derartig angetrieben, dass sich die Motorachse 12 im Uhrzeigersinn dreht, wobei sich auch in diesem Fall die Drehung der Motorachse 12 auf die Spindelstange 14 und den Bremskolben 16 überträgt, so dass diese wiederum in eine axiale Bewegung versetzt werden. Durch eine vorgegebene axiale Bewegung der Spindelstange 14 und des Bremskolbens 16 wird zwischen der Bremsscheibe 20 und den Bremsbelägen 18a und 18b ein definierter Luftspalt eingestellt.

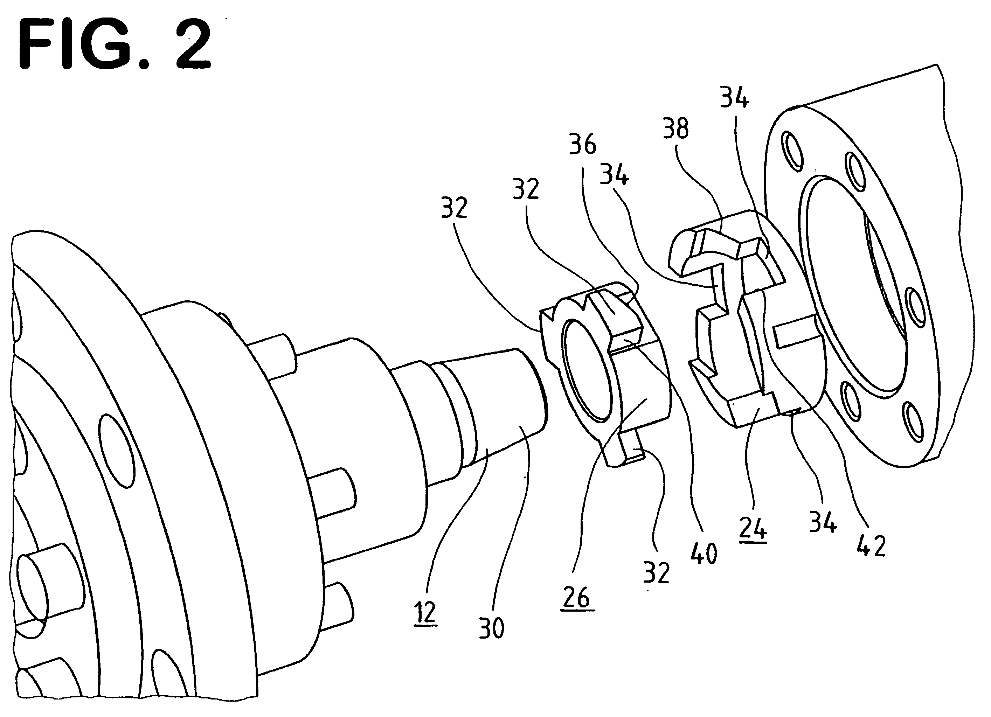

Neben den bisher erläuterten Bestandteilen verfügt der Bremsaktuator 2 über eine Feststellbremse, bestehend aus einer Betätigungsvorrichtung 22, einem gehäusefesten. Sperrring 24, einem Konusring 26 und einer Feder 28. Durch die Betätigungsvorrichtung 22 kann der auf der Motorachse 12 befindliche Konusring 26 entgegen der Federkraft der Feder 28 in axialer Position verschoben werden. In der ersten axialen Position verschwinden die Zähne 32 des Konusringes 26 in den Vertiefungen 34 des Sperrringes 24 (s. Fig. 2), so dass in dieser axialen Position der Konusring 26 gegenüber dem Sperrring 24 nicht verdrehbar ist. Die zweite axiale Position des Konusringes 26 zeichnet sich dadurch aus, dass die Zähne 32 des Konusringes 26 aus den Vertiefungen 34 des Sperrringes 24 zum Teil herausgeschoben sind. In dieser Position ist der Konusring 26 im Uhrzeigersinn (bei Blickrichtung durch den Sperring 24 auf den Konusring 26) gegenüber dem Sperrring soweit verdrehbar, bis die Schrägen 36 der Zähne 32 des Konusringes 26 sich im Eingriff mit den Rampen 38 der Vertiefungen 34 des Sperrringes 24 befinden. Sobald die Schrägen 36 der Zähne 32 auf den Rampen 38 der Vertiefungen 34 aufliegen, dreht sich der Konusring 26 am Sperrring 24 fest. Eine Drehung gegen den Uhrzeigersinn ist möglich, bis die Flanken 40 der Zähne 32 an den entsprechenden Seitenwänden 42 der Vertiefungen 34 des Sperrringes 24 "anschlagen" (s. Fig. 2).

Im Folgenden wird anhand der Figuren 1 und 2 erläutert, wie mit Hilfe der Feststellbremse ein dem Bremsaktuator 2 zugeordnetes Rad eines Kraftfahrzeuges feststellbar ist. Zunächst wird beispielsweise durch Betätigung eines (nicht gezeigten) Schalters im Amaturenbrett über den Elektromotor 4 der Bremsaktuator 2 solange betätigt, bis die Bremsbeläge 18a und 18b an der Bremsscheibe 20 anliegen, wodurch am dementsprechenden Rad eine Bremskraft erzeugt wird. Danach wird mit der Betätigungsvorrichtung 22 entgegen der Federkraft der Feder 28 der Konusring 26 von seiner ersten axialen Position, in der sich die Zähne 32 in den Vertiefungen 34 befinden, in seine zweite axialen Position verschoben, in der die Zähne 32 zum Teil aus den Vertiefungen 34 herausgeschoben sind. Eine axiale Verschiebung des Konusringes 26 durch die Betätigungsvorrichtung 22 ist solange möglich, bis der Konus des Konusringes 26 in Eingriff mit dem Konus 30 der Motorachse 12 gelangt und sich der Konusring 26 auf der Motorachse 12 "festsetzt". Befindet sich der Konusring 26 auf der Motorachse 12, so wird der Konusring 26 mit der Motorachse 12 im Uhrzeigersinn zurückgedreht, bis die Schrägen 36 der Zähne 32 des Konusringes 26 zum Aufliegen auf den Rampen 38 der Vertiefungen 34 des Sperrringes 24 gelangen. Eine weitere Drehung der Motorachse 12 im Uhrzeigersinn führt dazu, dass sich der Konusring 26 über die Schrägen 36 in dem Sperrring 24 "festdreht". Die Motorachse 12 dreht nicht weiter und die Bremsbeläge 18a und 18b sind an der Bremsscheibe 20 festgestellt, da die Rückstellkräfte in dem Bremsaktuator 2 nicht ausreichen, um die Motorachse 12 gegenüber dem auf der Motorachse 12 festsitzenden Konusring 26 zu verdrehen.

Ein Lösen der Feststellbremse geschieht wie folgt: Der Elektromotor 4 wird beispielsweise durch nochmaliges Betätigen des Schalters im Amaturenbrett derartig angesteuert, dass sich der Rotor 8 und damit die Motorachse 12 entgegen dem Uhrzeigersinn dreht. Infolgedessen wird auch der Konusring, der auf der Motorachse 12 festsitzt, entgegen dem Uhrzeigersinn gedreht und die Schrägen 36 der Zähne 32 heben von den Rampen 38 der Vertiefungen 34 ab, wenn der Elektomotor eine genügend große Kraft aufbringt. Bei einer weiteren Drehung gegen den Uhrzeigersinn schlagen die Flanken 40 der Zähne 32 an den Seitenwänden 42 der Vertiefungen 34 an, so dass der Konus des Konusringes 26 sich nicht weiter entgegengesetzt zu dem Uhrzeigersinn drehen kann, da der Sperrring 24 gehäusefest ist. Wird der Elektromotor 4 mit genügend großer Kraft angetrieben, so dreht sich die Motorachse 12 alleine entgegengesetzt dem Uhrzeigersinn weiter und der Konusring 26 bricht vom Konus 30 der Motorachse 12 los. Nach dem Losbrechen des Konusringes 26 von der Motorachse 12 wird der Konusring 26 durch die Feder 28 von seiner zweiten axialen Position in die erste axiale Position verschoben, so dass die Zähne 32 des Konusringes 26 wieder in den Vertiefungen 34 des Sperrringes 24 verschwinden. Danach kann die Motorachse 12 des Bremsaktuators 2 wieder frei in beide Drehrichtungen drehen und die Feststellbremse ist gelöst, so dass der Bremsaktuator für normale Bremsvorgänge zur Verfügung steht.

### Bezugszeichenliste

- 2: Bremsaktuator
- 4: Elektromotor
- 6: Stator
- 8: Rotor
- 10: Zuspannvorrichtung
- 12: Motorachse
- 14: Spindelstange
- 16: Bremskolben
- 18a,6: Bremsbeläge
- 20: Bremsscheibe
- 22: Betätigungsvorrichtung
- 24: Sperrring
- 26: Konusring
- 28: Feder
- 30: Konus
- 32: Zahn des Konusringes 26
- 34: Vertiefung im Sperrring 24
- 36: Schräge des Zahnes 32
- 38: Rampe der Vertiefung 34
- 40: Flanke des Zahnes 32
- 42: Seitenwand der Vertiefung 34

## Patentansprüche

1. Elektromotor (4), der zumindest folgende Bestandteile enthält:
- eine in zwei Drehrichtungen drehbare Motorachse (12)
- eine Feststellbremse, die in einer ersten Position eine Drehung der Motorachse (12) in beiden Drehrichtungen ungehindert zuläßt und in einer zweiten Position eine Drehung der Motorachse in einer Drehrichtung hemmt
- eine Betätigungsvorrichtung (22), mit der die Feststellbremse von der ersten Position in die zweite Position überführbar ist,
**dadurch gekennzeichnet, dass**
- die Feststellbremse einen Ring (26) und eine gegenüber der Motorachse (12) drehfeste Verankerung (24) enthält, wobei der Ring (26)
- axial verschiebbar zur Motorachse (12) des Elektromotors (4) angeordnet ist und
- in einer ersten axialen Position eine Drehung der Motorachse (12) in beiden Drehrichtungen ungehindert zuläßt und
- sich in einer zweiten axialen Position mit der Motorachse (12) im Eingriff befindet und sich mit dieser dreht, wobei in der zweiten axialen Position des Ringes (26) eine Drehung der Motorachse (12) in eine Drehrichtung dazu führt, dass der Ring (26) in Eingriff mit der gegenüber der Motorachse (12) drehfesten Verankerung (24) gelangt, wohingegen eine Drehung der Motorachse (12) in die andere Drehrichtung dazu führt, dass sich der Eingriff zwischen der Motorachse (12) und dem Ring (26) und zwischen der drehfesten Verankerung (24) und dem Ring (26) löst.

2. Elektromotor (4) nach Anspruch 1, **dadurch gekennzeichnet, dass** der Eingriff zwischen dem Ring (26) und der Motorachse (12) in der zweiten Position des Ringes (26) über einen Reibschluß erfolgt.

3. Elektromotor (4) nach Anspruch 1, **dadurch gekennzeichnet, dass** der Eingriff zwischen dem Ring (26) und der Motorachse (12) in der zweiten Position des Ringes (26) über einen Formschluß erfolgt.

4. Elektromotor (4) nach einem der Ansprüche 1 bis 3, **dadurch gekennzeichnet, dass** der Eingriff zwischen dem Ring (26) und der gegenüber der Motorachse (12) drehfesten Verankerung (24) über einen Formschluß erfolgt.

5. Elektromotor (4) nach einem der Ansprüche 1 bis 4, **dadurch gekennzeichnet, dass** die Betätigungsvorrichtung (22) mechanisch, elektromagnetisch oder elektromotorisch betätigbar ist.

6. Bremsaktuator für eine elektrische Bremsanlage, **dadurch gekennzeichnet, daß** der Bremsaktuator einen Elektromotor (4) nach einem der Ansprüche 1 bis 5 enthält.

## Claims

1. Electromotor (4), which includes at least the following component parts:
- a motor axle (12), which is rotatable in two directions of rotation,
- a parking brake which, in a first position, permits a rotation of the motor axle (12) in both directions of rotation in an unhindered manner and, in a second position, prevents a rotation of the motor axle in one direction of rotation, and
- an actuating apparatus (22), by means of which the parking brake can be transferred from the first position into the second position,
**characterised in that**
- the parking brake includes a ring (26) and a retaining means (24), which is non-rotatable relative to the motor axle (12), the ring (26)
- being disposed axially displaceably relative to the motor axle (12) of the electromotor (4) and
- permitting, in a first axial position, a rotation of the motor axle (12) in both directions of rotation in an unhindered manner and said ring
- being in engagement, in a second axial position, with the motor axle (12) and rotating therewith, a rotation of the motor axle (12) into one direction of rotation, in the second axial position of the ring (26), causing the ring (26) to engage with the retaining means (24), which is non-rotatable relative to the motor axle (12), whereas a rotation of the motor axle (12) into the other direction of rotation causes the engagement between the motor axle (12) and the ring (26) and between the non-rotatable retaining means (24) and the ring (26) to be released.

2. Electromotor (4) according to claim 1, **characterised in that** the engagement between the ring (26) and the motor axle (12) in the second position of the ring (26) is effected in a friction-locking manner.

3. Electromotor (4) according to claim 1, **characterised in that** the engagement between the ring (26) and the motor axle (12) in the second position of the ring (26) is effected in a form-locking manner.

4. Electromotor (4) according to one of claims 1 to 3, **characterised in that** the engagement between the ring (26) and the retaining means (24), which is non-rotatable relative to the motor axle (12), is effected in a form-locking manner.

5. Electromotor (4) according to one of claims 1 to 4, **characterised in that** the actuating apparatus (22) is actuatable mechanically, electromagnetically or electromotively.

6. Brake actuator for an electrical braking system, **characterised in that** the brake actuator includes an electromotor (4) according to one of claims 1 to 5.

## Revendications

1. Moteur électrique (4) qui comprend au moins les composants suivants :
◆ un axe de moteur (12) pouvant être en rotation dans deux sens de rotation,
◆ un frein d'arrêt qui, dans une première position, permet une rotation sans entrave de l'axe du moteur (12) dans les deux sens de rotation et qui, dans une seconde position, empêche une rotation de l'axe du moteur dans un sens de rotation,
◆ un dispositif d'actionnement (22) à l'aide duquel le frein d'arrêt peut passer de la première position à la seconde position,
**caractérisé en ce que**
◆ le frein d'arrêt comprend une bague (26) et un ancrage (24) fixe rotation par rapport à l'axe du moteur (12),
◆ où la bague (26) est disposée en pouvant se déplacer de façon axiale par rapport à l'axe (12) du moteur électrique (4), et
◆ où, dans une première position axiale, elle permet une rotation sans entrave de l'axe du moteur (12) dans les deux sens de rotation, et
◆ où, dans une seconde position axiale, elle se trouve en prise avec l'axe du moteur (12) et est en rotation avec celui-ci, où, dans la seconde position axiale de là bague (26), une rotation de l'axe du moteur (12) dans un sens de rotation a pour effet que la bague (26) vient en prise avec l'ancrage (24) fixe en rotation par rapport à l'axe du moteur (12), où, en revanche, une rotation de l'axe du moteur (12) dans l'autre sens de rotation a pour effet que la prise se libère entre l'axe du moteur (12) et la bague (26), et entre l'ancrage (24) fixe en rotation et la bague (26).

2. Moteur électrique (4) selon la revendication 1, **caractérisé en ce que** la prise entre la bague (26) et l'axe du moteur (12) se produit par frottement dans la seconde position de la bague (26).

3. Moteur électrique (4) selon la revendication 1, **caractérisé en ce que** la prise entre la bagué (26) et l'axe du moteur (12) se produit par une liaison de forme dans la seconde position de la bague (26).

4. Moteur électrique (4) selon l'une quelconque des revendications 1 à 3, **caractérisé en ce que** la prise entre la bague (26) et l'ancrage (24) fixe en rotation par rapport à l'axe du moteur (12) se produit par une liaison de forme.

5. Moteur électrique (4) selon l'une quelconque des revendications 1 à 4, **caractérisé en ce que** le dispositif d'actionnement (22) peut être actionné de façon mécanique, électromagnétique ou au moyen d'un moteur électrique.

6. Actionneur de frein pour un système de freinage électrique, **caractérisé en ce que** l'actionneur de frein comprend un moteur électrique (4) selon l'une quelconque des revendications 1 à 5.
